# EUROPÄISCHE PATENTSCHRIFT

(11) **EP 0 473 943 B1**
(45) Veröffentlichungstag und Bekanntmachung des Hinweises auf die Patenterteilung: **04.05.1994**
(21) Anmeldenummer: 91113003.7
(22) Anmeldetag: 02.08.1991
(51) Int. Cl.: C02F 11/12

(54) **Verfahren und Anlage zur Behandlung von Klärschlamm zur Deponierung**
Process and installation for the treatment of sludge for disposal
Procédé et installation pour le traitement des boues d'épuration pour leur décharge

(30) Priorität: 07.09.1990 DE 4028397
(43) Veröffentlichungstag der Anmeldung: 11.03.1992
(73) Patentinhaber: DEUTSCHE BABCOCK ANLAGEN GMBH, 46049 Oberhausen (DE)
(72) Erfinder: Wischniewski, Martin, W-4150 Krefeld 11 (DE); Thomas, Stephan, Dr., W-4150 Krefeld (DE); Schumann, Siegfried, W-7031 Magstadt (DE)
(74) Vertreter: Planker, Karl-Josef, Dipl.-Phys.

(56) Entgegenhaltungen:
- DE-A- 3 429 055
- DE-C- 3 915 082

## Beschreibung

Die Erfindung betrifft ein Verfahren und eine Anlage zur Behandlung von Klärschlamm zur Deponierung gemäß dem Oberbegriff des Anspruchs 1 bzw. des Anspruchs 8.

Eine wesentliche Forderung an zu deponierenden Klärschlamm ist, daß nach Einbau des Klärschlamms in die Deponie hohe Festigkeiten erzielt werden.

Die Flügelscherfestigkeiten des eingebauten Klärschlamms müssen bei Hausmülldeponien, in die jedoch nur ein Anteil von etwa 10 % Klärschlamm eingebracht werden darf, mindestens 20 kN/m² und bei Klärschlamm-Monodeponien mindestens 40 kN/m² betragen.

Derartige Festigkeitswerte können z.B., wie in der DE-Z "Bericht zur Essener Tagung: Klärschlamm - Rohstoff oder Schadstoff" (vom 9. bis 11.03.83, S. 109-126, insbesondere S. 114-118) beschrieben, durch Vermischung von entwässertem Schlamm mit einem Bindemittel, wie Feinkalk, erreicht (usw.) werden. Dabei wird entwässerter Schlamm aus Zentrifugen oder Siebbandpressen mit einem TS-Gehalt (Trockensubstanzgehalt in Massen- %) von 20 % zur Verfestigung mit Feinkalk, dessen Gewichtsanteil in etwa dem der Trockensubstanz entspricht, vermischt.

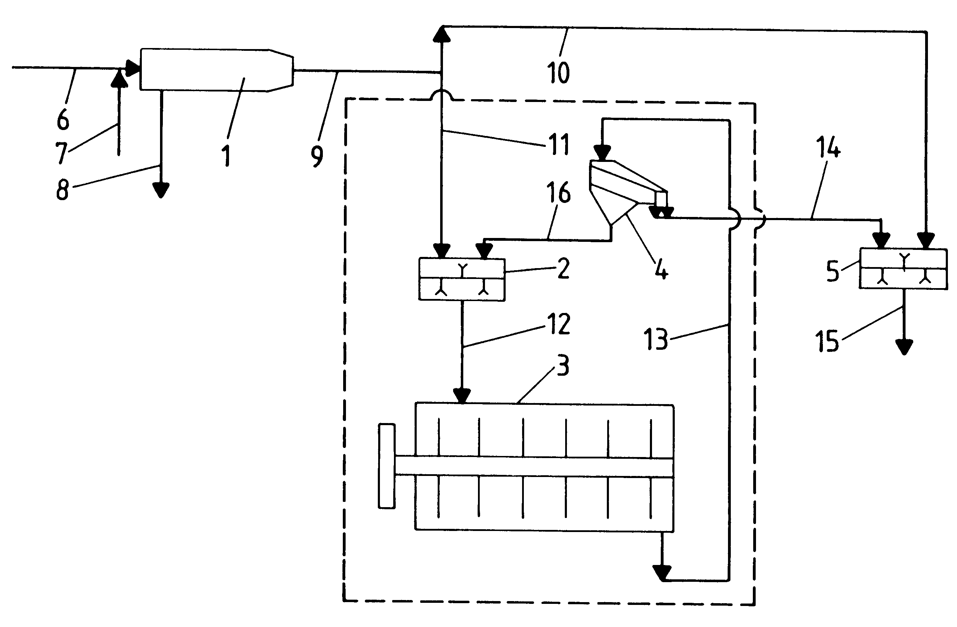

Der Einsatz erheblicher Mengen Bindemittel ist aufwendig und kostspielig. Ein wesentlicher Nachteil des Verfahrens ist außerdem der große Volumenbedarf des Klärschlamms beim Deponieren durch das zusätzliche Bindemittel und den noch hohen Wasseranteil (TS-Gehalt 25 bis 40 %, Abb. 2).

Zur Volumenreduzierung ist aus WLB IFAT-Report 1990, S. 51-54, ein Klärschlamm-Kompostierverfahren bekannt, bei dem dem Klärschlamm keine Zuschlagstoffe zugegeben werden müssen. Bei diesem gattungsbildenden Verfahren wird ein Teil des auf einen TS-Gehalt von 20 bis 30 % mechanisch entwässerten Klärschlamms auf einen TS-Gehalt von 75 bis 95 % getrocknet. Der übrige Teil des Schlamms wird mit dem Trockengut gemischt, so daß ein feuchtkrümliges Gemenge mit einem TS-Gehalt von 40 bis 60 % entsteht. Auf einer Schneckenpresse wird dieses Gemenge zu Preßlingen aggregiert und anschließend in einem wärmeisolierten Reaktor kompostiert, wobei sich der TS-Gehalt auf 70 bis 80 % erhöht.

Die Strukturierung des Gemenges muß so durchgeführt werden, daß die Preßlinge eine für die Kompostierung notwendige Luftdurchlässigkeit aufweisen. Daher ist die beim Einbau erreichbare Verfestigung des so behandelten Klärschlamms nicht besonders hoch. Außerdem benötigt dieses Verfahren mit einer Vielzahl von Verfahrensschritten eine recht aufwendige Anlage, die neben einem Trockner und einer Mischvorrichtung eine Vorrichtung zum Strukturieren, wie z.B. die Schneckenpresse, und einen Kompostierreaktor aufweist.

Zum Stand der Technik gehört auch ein in der DE-OS 34 29 055 beschriebenes Verfahren zur Behandlung von Klärschlamm, jedoch für die Verbrennung, bei dem dem Dickschlamm vor der Verbrennung eine von seinem Heizwert abhängige Menge Trockengut zugemischt wird.

Die erste Aufgabe der Erfindung besteht darin, ein Verfahren zur Behandlung von Klärschlamm gemäß dem Oberbegriff des Anspruchs 1 mit möglichst geringem anlagentechnischen Aufwand zu entwickeln. Dabei soll der behandelte Klärschlamm ein geringes Volumen und eine zum Einbau in Deponien ausreichende Festigkeit aufweisen.

Die zweite Aufgabe der Erfindung besteht darin, eine Anlage gemäß dem Oberbegriff des Anspruchs 8 zur Durchführung eines Verfahrens nach Anspruch 1 zu entwickeln.

Die kennzeichnenden Merkmale des Anspruchs 1 lösen die erste Aufgabe.

Mit nur vergleichsweise wenigen Verfahrensschritten, nämlich Entwässern, Trocknen, Klassieren und Mischen und infolgedessen mit nur geringem anlagentechnischen Aufwand wird ein deponierfähiges Produkt hergestellt. Ein auf das Mischen folgendes Strukturieren und ein anschließendes Kompostieren ist nicht notwendig.

Der Volumenbedarf des behandelten Klärschlammes ist durch den Verzicht auf Bindemittel und den geringen Wasseranteil der Mischung niedrig.

Eine erfindungsgemäße Mischung erreicht nach dem Einbau, d.h. nach dem Verdichten, eine Flügelscherfestigkeit > = 20 kN/m². Der Klärschlamm kann daher auf Deponien eingebracht werden.

Bei einer granulierenden Trocknung wird das Material während des Trockenvorgangs verdichtet. Es entsteht ein Granulat mit festem Korn, dessen Durchmesser bis zu 10 mm beträgt. Dieses Granulat enthält i.a. aber auch einen beträchtlichen Anteil an Feingut, sogenanntes Pudergut. Diese feine Fraktion wird bis auf einen Anteil von maximal 1,5 % des gesamten Trockengutes von diesem abgetrennt.

Die dabei hergestellte grobe Fraktion des Trockengutes besteht aus einem Granulat mit festen Körnern, deren unteren Korndurchmesser mindestens 0,8 mm beträgt.

Beim Mischen der groben Fraktion mit entwässertem, d.h. relativ flüssigem, Klärschlamm werden die Oberflächen der festen Körner der groben Fraktion angeweicht. Es bildet sich eine bindige, klebrige Mischung, die sich beim Verdichten während des Einbaues in die Deponie zähplastisch verhält und eine große Flügelscherfestigkeit aufweist.

Eine Festigkeit von > = 20 kN/m² wird jedoch nur erzielt, wenn der TS-Gehalt einer Mischung Werte von 65 bis 88 % annimmt.

Mischungen mit nur wenig höheren TS-Gehalten haben nur noch Festigkeiten um 10 kN/m². Sie enthalten außerdem für die Deponierung zuviel Staub und neigen im eingebauten Zustand zur Wasseraufnahme. Bei Mischungen mit einem geringeren TS-Gehalt fällt die Festigkeit schnell unter 20 kN/m². Ihr Volumen ist auch entsprechend des höheren Wasseranteils größer.

Zum Erreichen einer ausreichend hohen Festigkeit ist es daher notwendig,
- sowohl die zu trocknende Teilmenge des Klärschlammes granulierend zu trocknen,
- als auch vom getrockneten Klärschlamm eine feine Fraktion, sogenanntes Pudergut, abzutrennen
- und eine Mischung aus der groben Fraktion und entwässertem Klärschlamm mit einem TS-Gehalt von 65 bis 88 % herzustellen.

Mischungen mit einem TS-Gehalt von 65 bis 88 %, bei denen der trockene Teil z.B. pulverförmig aufgegeben wird, erreichen die notwendigen Festigkeiten nicht.

Bei Mischungen mit einem TS-Gehalt von 72 bis 84 % gemäß Anspruch 2 werden Flügelscherfestigkeiten > = 40 kN/m² erzielt, so daß der behandelte Klärschlamm auch auf Monodeponien eingebracht werden kann.

Mischungen, bei denen die grobe Fraktion des getrockneten Klärschlammes mit Korndurchmessern gemäß Anspruch 3 ohne Pudergut eingesetzt werden, weisen besonders hohe Festigkeiten auf.

Beim Mischen der feinen Fraktion und der zu trocknenden Teilmenge des entwässerten Klärschlammes gemäß Anspruch 4 entsteht ein krümliges Gemenge, das sich besonders gut zur granulierenden Trocknung eignet. Der TS-Gehalt der Mischung beträgt 60 bis 75 %.

Mischungen aus Feingut und entwässertem Klärschlamm mit einem TS-Gehalt von 62 bis 68 % gemäß Anspruch 5 führen bei einer granulierenden Trocknung zu einem Granulat mit besonders festem Korn.

Bei der Kontakttrocknung gemäß Anspruch 6 wird der Klärschlamm unter fortwährender Umwälzung durch Berührung mit heißen Flächen getrocknet, wobei gebildete Körner an den Heizflächen abrollen und dabei ständig verdichtet werden. Die Kontakttrocknung eignet sich daher besonders gut zur granulierenden Trocknung.

Das bei der Kontakttrocknung gebildete Granulat weist erst ab einem TS-Gehalt von > = 90 % ein ausreichend festes Korn auf, dessen Härte als Mahlbarkeit nach Hardgrove mit < 190 angegeben werden kann. TS-Gehalte von > 98 % sind kaum mehr herstellbar. Bei TS-Gehalten von 93 % bis 95 % erhalten die Körner des Granulates eine hohe Festigkeit, und das Granulat ist noch gut herstellbar.

Besonderer Vorteil des Verfahrens nach Anspruch 6 in Verbindung mit dem nach Anspruch 4 ist, daß Anbackungen an Heizflächen der Trockner vermieden werden, da durch das Mischen von entwässertem Klärschlamm mit Pudergut eine Mischung hergestellt wird, die besonders gut zur Kontakttrocknung geeignet ist.

Bei der maschinellen Entwässerung wird gemäß Anspruch 7 ein Klärschlamm mit einem TS-Gehalt von 15 bis 40 %, vorzugsweise 20 bis 35 %, erzeugt, Für entwässerten Klärschlamm mit TS-Gehalten < 15 % ist wegen des hohen Wasseranteils der Energieaufwand bei der Trocknung zu groß. Entwässerter Klärschlamm mit einem TS-Gehalt von > 40 % enthält zu wenig Wasser, um zusammen mit dem groben Trockengut eine verfestigbare Mischung zu bilden. Besonders gut zu verfestigende Mischungen erhält man mit Klärschlämmen mit einem TS-Gehalt von 20 bis 35 %. Außerdem lassen sich diese TS-Gehalte durch Zentrifugen, deren Vorteil in ihrer kontinuierlichen Arbeitsweise besteht, einstellen.

Die kennzeichnenden Merkmale des Anspruchs 8 lösen die zweite Aufgabe.

Die Zerlegung des getrockneten Klärschlamms in eine feine und eine grobe Fraktion kann auf einfache Weise durch die zwischen der ersten und zweiten Teilstrecke der Trockengutförderstrecke angeordnete Klassiervorrichtung durchgeführt werden. Die maschinelle Entwässerungseinrichtung ist z.B. eine Zentrifuge, eine Siebbandpresse oder eine Kammerfilterpresse, der Trockner z.B. ein Knettrockner, Schneckentrockner oder Scheibentrockner und der Mischer z.B. ein Pflugscharmischer oder ein Zwangsdurchlaufmischer.

Ein Sieb gemäß Anspruch 9 ist eine einfache Klassiervorrichtung. Darüber hinaus ist die Anlage gemäß Anspruch 9 besonders gut zur Durchführung eines Verfahrens nach Anspruch 3 geeignet.

Die Anlage nach Anspruch 10 ist besonders zur Durchführung eines Verfahrens nach Anspruch 4 und die des Anspruchs 11 besonders zur Durchführung eines Verfahrens nach Anspruch 6 geeignet.

Vorteil einer Zentrifuge gemäß Anspruch 12 ist, daß sie kontinuierlich betrieben werden kann. Die Anlage nach Anspruch 12 ist besonders zur Durchführung eines Verfahrens nach Anspruch 7 geeignet.

Die Zeichnung dient der Erläuterung der Erfindung anhand einer schematisch dargestellten Anlage zur Durchführung des erfindungsgemäßen Verfahrens.

Wesentliche Komponenten der in der Zeichnung dargestellten Anlage zur Behandlung von Klärschlamm zur Deponierung sind eine Zentrifuge 1 zur maschinellen Entwässerung, eine in der Zeichnung mit einer gestrichelten Linie gekennzeichnete Trocknungsvorrichtung mit einem Mischer 2, einem Kontakttrockner 3 und einem Sieb 4 und ein Mischer 5 zum Mischen von entwässertem und getrocknetem Klärschlamm.

In die Zentrifuge 1 mündet eine Klärschlammleitung 6 von einer Abwasseraufbereitungsanlage, an die eine Leitung 7 zur Zufuhr von Flockungshilfsmittel angeschlossen ist. An die Zentrifuge 1 ist außerdem eine Leitung 8 zur Rückleitung des Schlammwassers zur Abwasseraufbereitungsanlage angeschlossen.

Von einer Ausfuhreinrichtung 9 der Zentrifuge 1 für den entwässerten Schlamm ausgehend sind eine erste Fördereinrichtung 10 zu einem Eingang des Mischers 5 und eine zweite Fördereinrichtung zu einem Eingang des Kontakttrockners 3 geführt. Dabei verbindet ein erster Abschnitt 11 der zweiten Fördereinrichtung die Ausfuhreinrichtung 9 mit einem Eingang des Mischers 2 und ein zweiter Abschnitt 12 den Mischer 2 mit dem Eingang des Kontakttrockners 3.

Vom Kontakttrockner 3 geht eine Trockengutförderstrecke aus, deren erste Teilstrecke 13 zum Sieb 4 geführt ist und deren zweite Teilstrecke 14 von einem Überlauf des Siebes 4 zum Eingang des Mischers 5 geführt ist. Der Mischer 5 ist außerdem mit einer Ausfuhrvorrichtung 15 für das deponiefähige Produkt versehen. Vom Feingutausgang des Siebes 4, dessen Maschenweite 1 mm beträgt, ist eine Feingutförderstrecke 16 zum Eingang des Mischers 2 geführt.

Der Kontakttrockner 3 ist mit auf einem Rotor angeordneten, scheibenförmigen Heizflächen ausgestattet, wie in der DE-Z "Aufbereitungstechnik", Heft 5/88, 29. Jahrgang, Seiten 243 bis 251, beschrieben.

Im Betrieb wird der nasse Klärschlamm, dessen TS-Gehalt etwa 5 % beträgt, unter Zugabe von Flockungshilfsmittel in die Zentrifuge 1 gefördert. Dort wird das Schlammwasser abgetrennt, wobei der TS-Gehalt auf 20 bis 35 % angehoben wird.

5 bis 20 % des in der Zentrifuge 1 maschinell entwässerten Klärschlamms wird über die Ausfuhrvorrichtung 9 und die erste Fördereinrichtung 10 direkt in den Mischer 5 und die restlichen 80 bis 95 % des Klärschlamms über die Ausfuhrvorrichtung 9 und den ersten Abschnitt 11 der zweiten Fördereinrichtung in den Mischer 2 der Trocknungsvorrichtung gefördert. In den Mischer 2 wird außerdem das Pudergut aus dem Sieb 4 über die Feingutförderstrecke 16 gefördert.

Aus dem entwässerten Klärschlamm und dem Pudergut wird im Mischer 2 Klärschlamm mit einem TS-Gehalt von 62 bis 68 % hergestellt. Das im Mischer 2 gebildete Gemenge ist krümlig, d.h. es hat eine Struktur mit weichen Körnern, wobei der Durchmesser der meisten Körner zwischen 1 und 8 mm liegt.

Dieses Gemenge wird über den zweiten Abschnitt 12 der zweiten Fördereinrichtung in den Kontakttrockner 3 aufgegeben und unter fortwährender Umwälzung durch Berührung mit heißen Flächen auf einen TS-Gehalt von 93 bis 95 % getrocknet. Dabei bleibt die Struktur im wesentlichen erhalten, wobei sich die Körner erhärten und sich der Anteil der Körner mit sehr kleinem Durchmesser, d.h. der Anteil an Pudergut, erhöht.

Der trockene Klärschlamm wird über die erste Teilstrecke 13 der Trockengutförderstrecke zum Sieb 4 gefördert. Im Sieb 4 wird die feine Fraktion, bestehend aus Körnern mit einem Durchmesser kleiner als 1 mm, abgetrennt und als Pudergut über die Feingutförderstrecke 16 in den Mischer 2 gefördert. Die grobe Fraktion des trockenen Klärschlamms wird über die zweite Teilstrecke 14 der Trockengutförderstrecke in den Mischer 5 gefördert.

Im Mischer 5 wird der trockene und der entwässerte Klärschlamm gemischt, wobei der dem Mischer 5 zugeführte Anteil an trockenem Klärschlamm 60 bis 80 %, insbesondere 65 bis 70 %, beträgt.

Der TS-Gehalt der im Mischer 5 hergestellten, deponierfähigen Mischung beträgt 65 bis 88 % und ihre Festigkeit > = 20 kN/m²; bevorzugt wird eine Mischung mit einem TS-Gehalt von 72 bis 84 %, bei dem die Festigkeit Werte > = 40 kN/m² annimmt.

Der untere Durchmesser der Körner der groben Fraktion und damit die Maschenweite des Siebes 4 kann Werte zwischen 0,8 und 1,5 mm annehmen.

Die Mischung zur Herstellung des deponierfähigen Klärschlamms im Mischer 5 kann auch direkt auf einer Deponie durchgeführt werden.

### Beispiel:

110 t Naßschlamm mit einem TS-Gehalt von 5 % werden in der Zentrifuge 1 auf einen TS-Gehalt von 25 % entwässert. Man erhält 22 t entwässerten Schlamm. 2,5 t, d.h. 11 % des entwässerten Schlamms, werden dem Mischer 5 direkt aufgegeben.

Zur Trocknung der restlichen 19,5 t entwässerten Schlamms wird zunächst im Mischer 2 eine Mischung mit 29,5 t vom Kontakttrockner 3 zurückgeführtem Pudergut (mit einem TS-Gehalt von 95 %) hergestellt. Diese Mischung von 49 t hat einen TS-Gehalt von 67 % und wird im Kontakttrockner 3 auf eine Menge von 34,6 t mit einem TS-Gehalt von 95 % getrocknet. 5,1 t des den Kontakttrockner 3 verlassenden Schlamms werden durch das Sieb 4 aussortiert und zum Mischer 5 gefördert, der Rest wird wieder als Pudergut in den Mischer 2 zurückgeführt.

Im Mischer 5 werden 2,5 t entwässerter Schlamm und 5,1 t trockener Schlamm vermischt. Das Verhältnis entwässerter Schlamm zu trockenem Schlamm im Mischer 5 beträgt etwa 1 : 2. Die Mischung von 7,6 t hat einen TS-Gehalt von 72 % und im eingebauten Zustand eine Flügelscherfestigkeit von ca. 60 kN/m².

## Patentansprüche

1. Verfahren zur Behandlung von Klärschlamm, insbesondere für die Deponierung, bei dem
- der Klärschlamm maschinell entwässert wird,
- eine Teilmenge des entwässerten Klärschlamms getrocknet wird und
- die Restmenge des entwässerten Klärschlamms mit getrocknetem Klärschlamm gemischt wird,
dadurch gekennzeichnet, daß
- die zu trocknende Teilmenge granulierend getrocknet wird,
- der getrocknete Klärschlamm in eine grobe Fraktion und eine feine Fraktion zerlegt wird, wobei der untere Korndurchmesser der groben Fraktion mindestens 0,8 mm beträgt und
- aus der groben Fraktion des getrockneten Klärschlamms und der Restmenge des entwässerten Klärschlamms eine Mischung mit einem Trockensubstanzgehalt (TS-Gehalt) von 65 bis 88 % hergestellt wird.

2. Verfahren nach Anspruch 1, dadurch gekennzeichnet, daß der TS-Gehalt der Mischung 70 bis 87 % beträgt.

3. Verfahren nach Anspruch 1 oder 2, dadurch gekennzeichnet, daß bei der Zerlegung des getrockneten Klärschlamms eine grobe Fraktion mit einem unteren Korndurchmesser von 0,8 bis 1,5 mm hergestellt wird.

4. Verfahren nach einem der Ansprüche 1 bis 3, dadurch gekennzeichnet, daß die feine Fraktion mit der zu trocknenden Teilmenge des entwässerten Klärschlamms gemischt wird.

5. Verfahren nach Anspruch 4, dadurch gekennzeichnet, daß aus der feinen Fraktion und der zu trocknenden Teilmenge eine Mischung mit einem TS-Gehalt von 62 bis 68 % hergestellt wird.

6. Verfahren nach Anspruch 5, dadurch gekennzeichnet, daß die zu trocknende Teilmenge des Klärschlamms durch Kontakttrocknung auf einen TS-Gehalt von 90 bis 98 %, insbesondere 93 bis 95 %, getrocknet wird.

7. Verfahren nach einem der Ansprüche 1 bis 6, dadurch gekennzeichnet, daß der Klärschlamm auf einen TS-Gehalt von 15 bis 40 %, insbesondere 20 bis 35 %, maschinell entwässert wird.

8. Anlage zur Behandlung von Klärschlamm zur Deponierung nach einem Verfahren gemäß Anspruch 1
- mit einer maschinellen Entwässerungseinrichtung (1),
- mit einem Trockner (3),
- mit einem Mischer (5) zum Mischen von entwässertem und getrocknetem Klärschlamm,
- mit einer von der Entwässerungseinrichtung (1) ausgehenden, zu einem Eingang des Mischers (5) geführten ersten Fördereinrichtung (10),
- mit einer von der Entwässerungseinrichtung (1) ausgehenden, zu einem Eingang des Trockners (3) geführten zweiten Fördereinrichtung (11,12) und
- mit einer vom Trockner (3) ausgehenden, zum Eingang des Mischers (5) geführten Trockengutförderstrecke (13,14),
dadurch gekennzeichnet, daß
- die zweite Fördervorrichtung (11,12) über einen weiteren Mischer (2) geführt ist und daß
- eine erste Teilstrecke (13) der Trockengutförderstrecke in eine Klassiereinrichtung (4) mündet und
- eine zweite Teilstrecke (14) derselben Trockengutförderstrecke von einem Grobgutausgang der Klassiervorrichtung (4) zum Mischer (5) geführt ist.

9. Anlage nach Anspruch 8, gekennzeichnet durch ein Sieb (4) mit einer Maschenweite von 0,8 bis 1,5 mm als Klassiereinrichtung.

10. Anlage nach Anspruch 8 oder 9, dadurch gekennzeichnet, daß eine vom Feingutausgang ausgehende Feingutförderstrecke (16) in den zweiten Mischer (2) geführt ist.

11. Anlage nach einem der Ansprüche 8 bis 10, gekennzeichnet durch einen Kontakttrockner (3).

12. Anlage nach einem der Ansprüche 8 bis 11, gekennzeichnet durch eine Zentrifuge (1) als Entwässerungseinrichtung.

## Claims

1. A process for the treatment of sewage sludge, more particularly for disposal, in which
- the sewage sludge is dewatered mechanically,
- a part quantity of the dewatered sewage sludge is dried and
- the residual quantity of the dewatered sewage sludge is mixed with dried sewage sludge,
characterized in that
- the part quantity to be dried is dried into a granular form,
- the dried sewage sludge is separated into a coarse fraction and a fine fraction, the smallest grain diameter of the coarse fraction being at least 0.8mm, and
- a mixture is produced from the coarse fraction of the dried sewage sludge and the residual quantity of the dewatered sewage sludge which mixture has a dry substance content of 65 to 88%.

2. A process according to claim 1, characterized in that the dry substance content of the mixture is 70 to 87%.

3. A process according to claim 1 or 2, characterized in that when the dried sewage sludge is separated. a coarse fraction is produced which has a smallest grain diameter of 0.8 to 1.5mm.

4. A process according to one of claims 1 to 3, characterized in that the fine fraction is mixed with the part quantity of the dewatered sewage sludge which is to be dried.

5. A process according to claim 4, characterized in that a mixture is produced from the fine fraction and the part quantity to be dried which mixture has a dry substance content of 62 to 68%.

6. A process according to claim 5, characterized in that the part quantity of the sewage sludge to be dried is dried by contact drying to a dry substance content of 90 to 98%, more particularly 93 to 95%.

7. A process according to one of claims 1 to 6, characterized in that the sewage sludge is mechanically dewatered to a dry substance content of 15 to 40%, more particularly 20 to 35%.

8. An installation for the treatment of sewage sludge for disposal using a process according to claim 1,
- comprising a mechanical dewatering device (1),
- comprising a drier (3),
- comprising a mixer (5) for mixing dewatered and dried sewage sludge,
- comprising a first conveyor (10) proceeding from the dewatering device (1) and run to an inlet of the mixer (5),
- comprising a second conveyor (11, 12) proceeding from the dewatering device (1) and run to an inlet of the drier (3), and
- comprising a dry material conveyor way (13, 14) proceeding from the drier (3) and run to the inlet of the mixer (5),
characterized in that
- the second conveyor (11, 12) is run via another mixer (2), and in that
- a first section (13) of the dry material conveyor way discharges into a grading device (4) and
- a second section (14) of the same dry material conveyor way is run from a coarse material outlet of the grading device (4) to the mixer (5).

9. An installation according to claim 8, characterized by a screen (4) with a mesh size of 0.8 to 1.5mm as the grading device..

10. An installation according to claim 8 or 9, characterized in that a fine material conveyor way (16) proceeding from the fine material outlet is run into the second mixer (2).

11. An installation according to one of claims 8 to 10, characterized by a contact drier (3).

12. An installation according to one of claims 8 to 11, characterized by a centrifuge (1) as the dewatering device.

## Revendications

1. Procédé de traitement de boues d'épuration, en particulier pour la mise en décharge, dans lequel:
- les boues d'épuration sont déshydratées en machine ;
- une fraction des boues d'épuration déshydratées est séchée; et
- la quantité restante des boues d'épuration déshydratées est mélangée aux boues d'épuration séchées;
caractérisée en ce que
- la fraction à sécher est séchée avec formation de granules;
- les boues d'épuration séchées sont fractionnées en une fraction grossière et une fraction fine, le diamètre le plus faible des grains de la fraction grossière étant d'au moins 0,8 mm;
- un mélange ayant une teneur en matières sèches (teneur MS) comprise entre 65 et 88% est réalisée à partir de la fraction grossière des boues d'épuration séchées et la quantité restante des boues d'épuration déshydratées.

2. Procédé selon la revendication 1, caractérisé en ce que la teneur MS du mélange est comprise entre 70 et 87%.

3. Procédé selon la revendication 1 ou 2, caractérisé en ce qu'une fraction grossière, dont le diamètre le plus faible des grains est compris entre 0,8 et 1,5 mm, est préparée au cours du fractionnement des boues d'épuration séchées.

4. Procédé selon l'une des revendications 1 à 3, caractérisé en ce que la fraction fine est mélangée avec la fraction à sécher des boues d'épuration déshydratées.

5. Procédé selon la revendication 4, caractérisé en ce qu'à partir de la fraction fine et de la fraction à sécher est préparé un mélange ayant une teneur MS de 62 à 68%.

6. Procédé selon la revendication 5, caractérisé en ce que la fraction à sécher des boues d'épuration est séchée par séchage par contact jusqu'à une teneur MS de 90 à 98%, particulièrement de 93 à 95%.

7. Procédé selon l'une des revendications 1 à 6, caractérisé en ce que les boues d'épuration sont déshydratées en machine jusqu'à une teneur MS de 15 à 40%, en particulier de 20 à 35%.

8. Installation de traitement de boues d'épuration à mettre en décharge, par un procédé selon la revendication 1, comportant :
- un dispositif de déshydratation en machine (1),
- un sécheur (3),
- un mélangeur (5) pour mélanger des boues d'épuration déshydratées et des séchées,
- un premier dispositif de transport (10) partant du dispositif de déshydratation (1) et conduisant jusqu'à une entrée du mélangeur (5),
- un deuxième dispositif de transport (11, 12) partant du dispositif de déshydratation (1) et conduisant jusqu'à une entrée du sécheur (3), et
- une ligne de transport de produits secs (13, 14) partant du sécheur (3) et conduisant jusqu'à entrée du mélangeur (5),
caractérisée en ce que
- le deuxième dispositif de transport (11, 12) conduit par l'intermédiaire d'un autre mélangeur (2)
et en ce que
- une première section (13) de la ligne de transport de produits secs débouche dans un dispositif de classification (4) et
- une deuxième section (14) de la même ligne de transport de produits secs conduit depuis une sortie de produits grossiers du dispositif de classification (4) jusqu'au mélangeur (5).

9. Installation selon la revendication 8, caractérisée par un tamis (4) ayant une dimension de mailles de 0,8 à 1,5 mm et servant de dispositif de classification.

10. Installation selon la revendication 8 ou 9, caractérisée en ce qu'une ligne de transport de produits fins (16) partant de la sortie des produits fins conduit dans le deuxième mélangeur (2).

11. Installation selon l'une des revendications 8 à 10, caractérisée par un sécheur à contact (3).

12. Installation selon l'une des revendications 8 à 11, caractérisée par une centrifugeuse (1) servant de dispositif de déshydratation.
